# EUROPÄISCHE PATENTSCHRIFT

(11) **EP 1 265 772 B1**
(45) Veröffentlichungstag und Bekanntmachung des Hinweises auf die Patenterteilung: **04.08.2004**
(21) Anmeldenummer: 01909517.3
(22) Anmeldetag: 24.01.2001
(51) Int. Cl.: B60R 21/34, E05B 65/20

(54) **ADAPTIVE TÜRSICHERUNG FÜR KRAFTFAHRZEUGE**
ADAPTIVE DOOR LOCKING SYSTEM FOR MOTOR VEHICLES
SECURITE DE PORTE ADAPTATIVE POUR VEHICULES

(30) Priorität: 01.02.2000 DE 10004161
(43) Veröffentlichungstag der Anmeldung: 18.12.2002
(73) Patentinhaber: ROBERT BOSCH GMBH, 70442 Stuttgart (DE)
(72) Erfinder: SCHLICK, Michael, 76372 Pfinztal (DE); HOETZEL, Juergen, 61197 Florstadt (DE)
(86) Internationale Anmeldenummer: PCT/DE2001/000268
(87) Internationale Veröffentlichungsnummer: WO 2001/056842

(56) Entgegenhaltungen:
- WO-A-96/33079
- DE-A- 19 537 619
- US-A- 4 458 446
- US-A- 4 667 195
- PATENT ABSTRACTS OF JAPAN vol. 017, no. 049 (P-1478), 29. Januar 1993 (1993-01-29) & JP 04 262289 A (MITSUBISHI ELECTRIC CORP), 17. September 1992 (1992-09-17)

## Beschreibung

### Stand der Technik

Die Erfindung betrifft eine adaptive Türsicherung für Kraftfahrzeuge mit einer Sicherungsvorrichtung, die abhängig von der sensorisch erfassten Fahrzeugumgebung das Öffnen einer Fahrzeugtür freigibt oder verhindert.

Eine derartige Türsicherung ist aus DE 41 19 579 A1 bekannt.

Diese bekannte Türsicherung verwendet eine zusätzliche Türbremse, die die Türbewegung im Gefahrenfall blockiert, z. B. wenn sich während dem Öffnen der Tür ein bewegtes Objekt, z. B. ein Radfahrer, nähert. Dabei besteht bei der bekannten Türsicherung die Möglichkeit, trotz des Ansprechens der Türbremse die Tür beispielsweise geringfügig weiter auf bzw. im Schließsinne zu bewegen. Dies ist jedoch von einem praktischen Sicherheitskonzept her gesehen nicht wünschenswert, da es Umgebungssituationen geben kann, bei denen die Tür vollständig geschlossen bleiben sollte.

Eine Türsicherung gemäß dem Oberbegriff des Anspruchs 1 ist aus DE 19 537 619 A bekannt.

Allgemein sind bereits verschiedene Ultraschallsensoren zur Überwachung der Fahrzeugumgebung in Kraftfahrzeugen in Funktion. Alternativ einsetzbare Mikrowellen-, Video-, Infrarot Triangulations- und/oder aktiv optische Sensoren werden zukünftig verstärkt eingebaut.

Es gibt ferner bereits auf dem Markt Parkpilotsysteme, die auf den von einer die Fahrzeugumgebung überwachenden Umgebungssensorik aufbauen.

### Aufgabe und Vorteile der Erfindung

Es ist Aufgabe der Erfindung, eine bessere adaptive Türsicherung zu ermöglichen.

Diese Aufgabe wird durch die Merkmale des Anspruchs 1 gelöst.

Angepasst an die Situation und das Sicherheitskonzept werden die Insassen vor Gefahr gewarnt, das Entriegeln der Tür durch das Türschließsystem verzögert, die Tür durch das Türschließsystem nicht geöffnet oder Kombinationen dieser Maßnahmen ausgeführt.

Das erfindungsgemäße Konzept zeichnet sich dadurch aus, dass prinzipiell keine zusätzliche Hardware, wie z. B. die bei der bekannten Türsicherung eingesetzte Türbremse notwendig ist, sondern dass ohne zusätzliche Hardware eine erweiterte Funktionalität realisiert wird. Insbesondere ist durch eine softwaremäßige Realisation in einem bereits vorhandenen Steuergerät, z. B. dem Steuergerät des Türschließsystems, eine einfache kundenspezifische Applikation der Software möglich. Für Nachrüstsysteme oder auf Wunsch können die Softwaremittel auch in einem eigenen Steuergerät für die erfindungsgemäße adaptive Türsicherung realisiert werden.

Gemäß einem wesentlichen Aspekt zeichnet sich die erfindungsgemäße adaptive Türsicherung dadurch aus, dass die Sicherungsvorrichtung das Türschließsystem, eine am/im Kraftfahrzeug vorgesehene Umgebungssensorik und auf das Türschließsystem einwirkende Überwachungsmittel umfasst, wobei die Umgebungssensorik Signale erzeugt, die den Überwachungsmitteln zugeführt werden, welche das Türschließsystem so ansteuern, dass dieses die Tür dauernd oder für eine bestimmte oder bestimmbare Zeit geschlossen halten, wenn sie anhand der von der Umgebungssensorik gelieferten Signale beurteilen, dass die Sicherheit beim Öffnen der Tür durch die Fahrzeugumgebungssituation in Frage gestellt ist.

Bevorzugt wird die Sicherungsvorrichtung deaktiviert, wenn das Fahrzeug eine vorbestimmte Geschwindigkeit überschreitet und reaktiviert, wenn das Fahrzeug eine vorbestimmte Geschwindigkeit unterschreitet.

Die Sicherungsvorrichtung wird außerdem deaktiviert, wenn das Fahrzeug von außen abgeschlossen wird. In jedem Fall jedoch wird die Sicherungsvorrichtung durch Betätigung der inneren Türgriffe aktiviert.

Die Überwachungsmittel überprüfen die Berechtigung der Türgriffbetätigung anhand der von der Umgebungssensorik gelieferten Sensorsignale und anhand von anderen im Fahrzeug vorhandenen Signalen. Wenn z. B. die Überwachungsmittel anhand der von der Umgebungssensorik gelieferten Signale beurteilen, dass sich ein ruhendes, für den Fahrzeugbenutzer nicht sichtbares Objekt, z. B. ein Blumenkübel, im Schwenkbereich der Tür befindet, kann die Sicherungsvorrichtung eine akustische Warnung abgeben und das Türschließsystem so beaufschlagen, dass dieses die Tür zeitverzögert entriegelt.

Wenn andererseits die überwachungsmittel beurteilen, dass sich ein bewegtes Objekt, z. B. ein Radfahrer, aus einem nicht sichtbaren oder nur schwer einsehbaren Bereich, z. B. dem toten Winkel, einem erweiterten Schwenkbereich der Tür nähert, kann die Sicherungsvorrichtung eine akustische Warnung abgeben und das Türschließsystem so beaufschlagen, dass dieses die Tür blockiert hält. Dabei wird unter einem erweiterten Schwenkbereich der Tür der geometrische Schwenkbereich desselben zuzüglich eines Sicherheitsabstandes verstanden.

### Zeichnung

In der beiliegenden Zeichnung wird ein Ausführungsbeispiel der erfindungsgemäßen adaptiven Türsicherung näher erläutert.

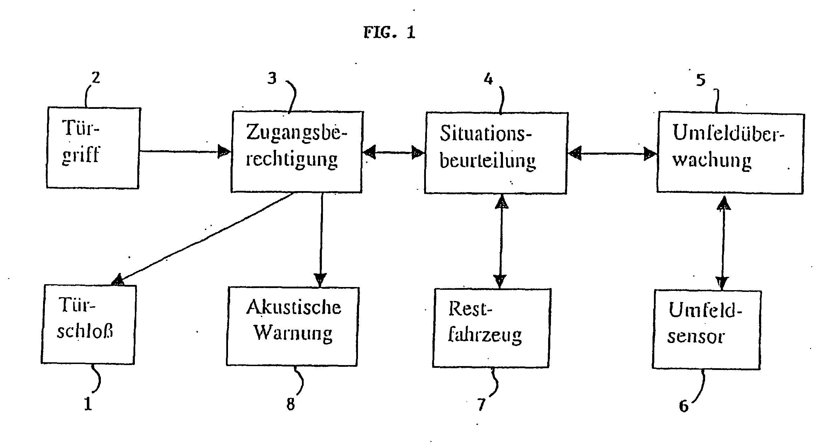

Figur 1 zeigt Funktionsblöcke einer adaptiven Türsicherung gemäß der Erfindung und deren funktionelle Verbindung und
Figur 2 zeigt ein Blockschaltdiagramm der Hardwarekomponenten der erfindungsgemäßen dargestellten adaptiven Türsicherung.

### Ausführungsbeispiel

Eine Umgebungssensorik 6 liefert umgebungssituationsrelevante Signale an Überwachungsmittel 5. Die Überwachungsmittel 5 aktivieren ihrerseits eine Situationsbeurteilung 4 aufgrund der von der Umgebungssensorik 6 gelieferten Signale und gegebenenfalls auch aufgrund von sonstigen Fahrzustands- oder Fahrzeugsignalen 7, ob die Sicherheit beim Öffnen einer Fahrzeugtür gewährleistet ist oder nicht.

Wird von einem Fahrzeuginsassen der Türöffner am Türgriff 2 betätigt, erfolgt eine Berechtigungsprüfung 3 der Aktion. Diese Berechtigungsprüfung 3 wird kombiniert mit dem Ergebnis der Situationsbeurteilung 4 der Überwachungsmittel. Nach der Situationsbeurteilung 4, d. h. zumindest der Beurteilung der Fahrzeugumgebung oder im erweiterten Konzept auch der Beurteilung der Fahrsituation, erfolgt eine angepasste Entriegelung der Tür durch das Türschließsystem 1.

Insbesondere können dabei folgende Situationen berücksichtigt werden:
- ein bewegtes Objekt, z. B. ein Radfahrer, nähert sich aus einem nicht sichtbaren oder nur schwer einsehbaren Bereich, z. B. dem toten Winkel, einem erweiterten Schwenkbereich der Tür. Es erfolgt eine akustische Warnung 8 und die Tür wird durch das Türschließsystem 1 blockiert. Unter einem erweiterten Schwenkbereich der Tür wird hierbei der Schwenkbereich der Tür zuzüglich eines Sicherheitsabstandes verstanden.
- Ein ruhendes Objekt, z. B. ein Verkehrsschild, befindet sich im Schwenkbereich der Tür. Es erfolgt eine akustische Warnung 8 und das Türschließsystem 1 entriegelt die Tür zeitverzögert.

Wie erwähnt, kann in einem erweiterten Ansatz auch die Fahrsituation mit einbezogen werden. Bei Betätigen des Türöffners, d. h. des Türgriffs, in einem fahrenden Fahrzeug kann die Situationsbeurteilung 4 der Überwachungsmittel'das Türschließsystem so beaufschlagen, dass dieses die Tür verbunden mit einer akustischen Warnung entriegelt. In einem rollenden Fahrzeug kann eine akustische Warnung 8 verbunden mit einem zeitverzögerten Entriegeln der Tür erfolgen.

Aus dem Funktionsblock 7 können für die Situationsbeurteilung 4 verschiedene bereits im Fahrzeug vorhandene Sensorsignale über die Fahrsituation bzw. den Fahrzeugzustand geliefert werden. Dies können sein ein Fahrrichtungssignal, ein Geschwindigkeitssignal, ein Beschleunigungssignal, ein Querbeschleunigungssignal, ein Lagesignal des Fahrzeugs, Nick-, Roll- und Stampfsignale des Fahrzeugs sowie ein Zündungaktivsignal.

Abhängig vom angestrebten Sicherheitskonzept und dem Ausstattungsstand des Fahrzeugs können die verschiedenen Entriegelungsarten, wie Entriegeln, Entriegeln mit akustischer Warnung, zeitverzögertes Entriegeln mit akustischer Warnung bzw. Sperren mit akustischer Warnung, auch in anderen Kombinationen mit Gefahrensituazionen verbunden werden.

Von der Erfindung unberührt bleiben bereits existierende Sicherungen und Sicherheitskonzepte, wie die Kindersicherung und/oder Sicherheitsschaltungen des Schließsystems.

Das Aktivierungs-/Deaktivierungskonzept des Schließsystems bleibt bestehen. Im Fahrbetrieb, d. h. bei aktiver Zündung, ist die Umfeldüberwachung 5 aktiv. Sie wird beim Überschreiten einer Geschwindigkeitsschwelle deaktiviert und nach Unterschreiten derselben reaktiviert. Die Betätigung eines Türgriffs im Fahrzeuginneren aktiviert in jedem Fall die Umfeldüberwachung 5 durch die Umgebungssensorik 6.

Die Deaktivierung kann zeitverzögert nach der Abschaltung der Zündung bzw. nach dem Ende der Betätigung eines Türöffners am Türgriff erfolgen. Die Umfeldüberwachung 5 durch die Sensorik 6 kann auch beim Abschließen des Fahrzeugs von außen deaktiviert werden.

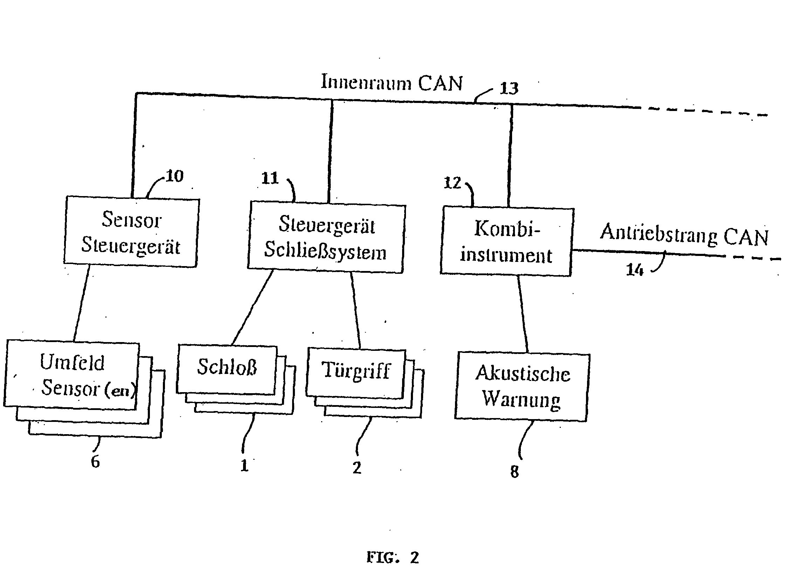

Bei dem die Hardwarekomponenten und deren Signalverbindungen eines Ausführungsbeispiels darstellenden Blockschaltbild in Figur 2 sind ein Sensorsteuergerät 10, ein Steuergerät 11 für das Schließsystem 1 sowie ein Kombiinstrument 12 durch ein Innenraum CAN 13 miteinander und gegebenenfalls mit weiteren (nicht gezeigten) Komponenten, wie einem Steuergerät des Antriebsmotors, verbunden. Das Kombiinstrument 12 ist über ein Antriebsstrang CAN 14 mit dem (nicht gezeigten) Antriebsmotor bzw. einem (ebenfalls nicht gezeigten) Motorsteuergerät verbunden. Die Umgebungssensorik 6 ist direkt mit dem Sensorsteuergerät 10 verbunden. Das Schließsystem 1 und der Türbetätigungsmechanismus, d. h. der Türgriff 2, ist mit dem Steuergerät 11 für das Schließsystem verbunden. Mit dem Kombiinstrument 12 ist eine akustische Warnvorrichtung 8 verbunden.

Die vorgeschlagene adaptive Türsicherung verbindet die Überwachung 5, 6 der Fahrzeugumgebung mit dem Schließsystem 1. Angepasst an die Umgebungssituation und das Sicherheitskonzept werden die Insassen vor Gefahr gewarnt, das Entriegeln der Tür verzögert, die Tür nicht geöffnet oder Kombinationen davon ausgeführt. Die erfindungsgemäße Türsicherung zeichnet sich dadurch aus, dass sie prinzipiell keine zusätzlichen Hardwarekomponenten benötigt sondern durch eine softwaremäßige Erweiterung bestehender Komponenten eine erweiterte Funktionalität realisiert. Insbesondere ist eine einfache kundenspezifische Applikation der Softwarekomponenten möglich. Für Nachrüstsysteme oder bei Wunsch kann die Software auch auf einem eigenen Steuergerät realisiert werden.

## Patentansprüche

1. Adaptive Türsicherung für Kraftfahrzeuge mit einer Sicherungsvorrichtung, die abhängig von wenigstens einer sensorisch erfassten Fahrzeugumgebungssituation das Öffnen einer Fahrzeugtür freigibt oder verhindert, wobei die Sicherungsvorrichtung das Türschließsystem (1, 2, 11), eine am/im Kraftfahrzeug vorgesehene Umgebungssensorik (6) und auf das Türschließsystem (1, 2, 11) einwirkende Überwachungsmittel (10) umfasst, wobei die Umgebungssensorik (6) Signale erzeugt, die den Überwachungsmitteln (10) zugeführt werden, welche das Türschließsystem (1, 2, 11) so ansteuern, dass dieses die Tür dauernd oder für eine bestimmte oder bestimmbare Zeit geschlossen halten, wenn sie anhand der von der Umgebungssensorik (6) gelieferten Signale beurteilen, dass die Sicherheit beim Öffnen der Tür durch die Fahrzeugumgebungssituation in Frage gestellt ist,
**dadurch gekennzeichnet, dass** die Sicherungsvorrichtung, wenn die überwachungsmittel (10) beurteilen, dass sich ein ruhendes, für den Fahrzeugbenutzer nicht sichtbares Objekt im Schwenkbereich der Tür befindet, eine akustische und/oder eine optische Warnung abgibt, und das Türschließsystem (1, 2, 11) ,so ansteuert, dass die Tür zeitverzögert entriegelt wird.

2. Türsicherung nach Anspruch 1, **dadurch gekennzeichnet, dass** die Sicherungsvorrichtung deaktiviert wird, wenn das Fahrzeug eine vorbestimmte Geschwindigkeit überschreitet, und reaktiviert wird, wenn das Fahrzeug eine vorbestimmte Geschwindigkeit unterschreitet.

3. Türsicherung nach Anspruch 1 oder 2, **dadurch gekennzeichnet, dass** die Sicherungsvorrichtung deaktiviert wird, wenn das Fahrzeug von außen abgeschlossen wird.

4. Türsicherung nach einem der vorangehenden Ansprüche, **dadurch gekennzeichnet, dass** die Sicherungsvorrichtung in jedem Fall durch Betätigung der inneren Türgriffe aktiviert wird.

5. Türsicherung nach Anspruch 4, **dadurch gekennzeichnet, dass** die Überwachungsmittel die Berechtigung der Türgriffbetätigung anhand der Sensorsignale von der Umgebungssensorik und von anderem im Fahrzeug vorhandenen Signalen überprüfen.

6. Türsicherung nach einem der vorangehenden Ansprüche, **dadurch gekennzeichnet, dass** die Sicherungsvorrichtung, wenn die Überwachungsmittel beurteilen, dass sich ein bewegtes Objekt aus einem für den Fahrzeugbenutzer nicht sichtbaren oder schwer einsehbaren Bereich dem relevanten Schwenkbereich der Fahrzeugtür, inklusive eines Sicherheitsbereichs. nähert, eine akustische und oder eine optische Warnung abgibt und das Türschließsystem so ansteuert, dass die Tür geschlossen gehalten wird.

7. Türsicherung nach Anspruch 1, **dadurch gekennzeichnet, dass** die Sicherungsvorrichtung, wenn die Überwachungsmittel beurteilen, dass sich ein bewegtes Objekt aus einem für den Fahrzeugbenutzer nicht sichtbaren oder schwer einsehbaren Bereich dem relevanten Schwenkbereich der Fahrzeugtür, inklusive eines Sicherheitsbereichs nähert, eine akustische und oder eine optische Warnung abgibt und das Türschließsystem so ansteuert, dass die Tür bei konstant aktivierter Türöffnung nach einer Zeitverzögerung entriegelt wird.

8. Türsicherung nach einem der vorangehenden Ansprüche, **dadurch gekennzeichnet, dass** die Umgebungssensorik (6) Ultraschall-, Mikrowellen-, Video-, Infrarot Triangulations- und/oder aktiv optische Sensoren aufweist.

9. Türsicherung nach einem der vorangehenden Ansprüche, **dadurch gekennzeichnet, dass** die Sicherungsvorrichtung über ein Leitungsnetzwerk (13) mit anderen im Fahrzeug vorhandenen Sensoren und/oder Steuergeräten in Verbindung steht und von dort Signale über die Lage und/oder Fahrzeugsituation des Fahrzeugs empfängt.

10. Türsicherung nach Anspruch 8, **dadurch gekennzeichnet, dass** die Sicherungsvorrichtung über das Leitungsnetzwerk (13) wenigstens eines oder mehrere von folgenden Signalen empfängt:
- ein Fahrrichtungssignal,
- ein Fahrgeschwindigkeitssignal,
- ein Beschleunigungssignal,
- ein Querbeschleunigungssignal,
- ein Lagesignal z. B. über Azimut und Elevation,
- ein Nickwinkelsignal und/oder
- ein Rollwinkelsignal
- ein Zündungaktiv-Signal.

## Claims

1. Adaptive door-locking system for motor vehicles having a locking device which enables or prevents the opening of a vehicle door as a function of at least one situation in the surroundings of the vehicle sensed by sensor, the locking device comprising a door-locking system (1, 2, 11), a sensor system (6) for sensing the surroundings, provided on/in the motor vehicle, and monitoring means (10) which act on the door-locking system (1, 2, 11), the sensor system (6) for sensing the surroundings generating signals which are fed to the monitoring means (10) which actuate the door-locking system (1, 2, 11) so that it keeps the door permanently closed, or closed for a specific or specifiable time if it assesses, by reference to the signal supplied by the sensor system (6) for sensing the surroundings, that the security on opening the door is put at risk as a result of the situation in the surroundings of the vehicle, **characterized in that**, if the monitoring means (10) assess that a stationary object which is not visible to the user of the vehicle is located in the swinging region of the door, the locking device outputs an audible and/or visual warning and actuates the door-locking system (1, 2, 11) in such a way that the door is unlocked after a delay.

2. Door-locking system according to Claim 1, **characterized in that** the locking device is deactivated if the vehicle exceeds a predetermined speed, and it is reactivated if the vehicle drops below a predetermined speed.

3. Door-locking system according to Claim 1 or 2, **characterized in that** the locking device is deactivated if the vehicle is shut off from the outside.

4. Door-locking system according to one of the preceding claims, **characterized in that** the locking device is activated in all cases by the actuation of the internal door handles.

5. Door-locking system according to Claim 4, **characterized in that** the monitoring means check the authorization of the actuation of the door handle by reference to the sensor signals from the sensor system for sensing the surroundings, and by reference to other signals present in the vehicle.

6. Door-locking system according to one of the preceding claims, **characterized in that**, if the monitoring means assess that a moving object is approaching the relevant pivoting area of the vehicle door, including a safety area, from an area which cannot be seen by, or is difficult to see for the user of the vehicle, the locking device outputs an audible and/or a visual warning and actuates the door-locking system in such a way that the door is kept closed.

7. Door-locking system according to Claim 1, **characterized in that**, if the monitoring means assess that a moving object is approaching the relevant pivoting area of the vehicle door, including a safety area, which cannot be seen by, or is difficult to see for, the user of the vehicle, the locking device outputs an audible and/or a visual warning and actuates the door-closing system in such a way that when the door opening is actuated constantly the door is unlocked after a delay.

8. Door-locking system according to one of the preceding claims, **characterized in that** the sensor system (6) for sensing the surroundings has ultrasonic sensors, microwave sensors, video sensors, infrared triangulation sensors and/or actively optical sensors.

9. Door-locking system according to one of the preceding claims, **characterized in that** the locking device is connected via a line network (13) to other sensors which are present in the vehicle and/or control devices, and receives from there signals relating to the position and/or situation of the vehicle.

10. Door-locking system according to Claim 8, **characterized in that** the locking device receives at least one or more of the following signals via the line network (13):
- a travel direction signal,
- a travelling speed signal,
- an acceleration signal,
- a transverse acceleration signal,
- a position signal, for example relating to the azimuth and elevation,
- a pitch angle signal and/or
- a rolling angle signal
- an ignition-active signal.

## Revendications

1. Sécurité de porte adaptative pour véhicules automobiles comportant un dispositif de sécurité, qui en fonction d'au moins une situation environnementale du véhicule enregistrée par des capteurs permet ou empêche l'ouverture d'une porte de véhicule, le dispositif de sécurité comprenant le système de fermeture de porte (1, 2, 11), un dispositif sensoriel environnemental (6) prévu au niveau du/dans le véhicule automobile et des moyens de surveillance (10) agissant sur le système de fermeture de porte (1, 2, 11), le dispositif sensoriel environnemental (6) générant des signaux envoyés aux moyens de surveillance (10) qui commandent le système de fermeture de porte (1, 2, 11) de telle sorte qu'ils maintiennent la porte fermée durablement ou pour un temps déterminé ou pouvant être déterminé lorsqu'ils estiment, à l'aide des signaux fournis par le dispositif sensoriel environnemental (6), que la sécurité lors de l'ouverture de la porte est remise en question par la situation environnementale du véhicule,
**caractérisée en ce que**
lorsque les moyens de surveillance (10) estiment qu'un objet immobile invisible pour l'utilisateur du véhicule se trouve dans la zone de pivotement de la porte, le dispositif de sécurité émet un avertissement acoustique et/ou optique, et commande le système de fermeture de porte (1, 2, 11) de telle sorte que la porte est déverrouillée avec retard.

2. Sécurité de porte selon la revendication 1,
**caractérisée en ce que**
le dispositif de sécurité est désactivé lorsque le véhicule dépasse une vitesse prédéterminée, et est réactivé lorsque le véhicule passe en dessous d'une vitesse prédéterminée.

3. Sécurité de porte selon la revendication 1 ou 2,
**caractérisée en ce que**
le dispositif de sécurité est désactivé lorsque le véhicule est fermé de l'extérieur.

4. Sécurité de porte selon l'une des revendications précédentes,
**caractérisée en ce que**
le dispositif de sécurité est activé dans tous les cas par l'actionnement des poignées de porte intérieures.

5. Sécurité de porte selon la revendication 4,
**caractérisée en ce que**
les moyens de surveillance vérifient l'autorisation de l'actionnement de la poignée de porte à l'aide des signaux de capteur provenant du dispositif sensoriel environnemental et d'autres signaux présents dans le véhicule.

6. Sécurité de porte selon l'une des revendications précédentes,
**caractérisée en ce que**
lorsque les moyens de surveillance estiment qu'un objet mobile provenant d'une zone invisible pour l'utilisateur du véhicule ou d'une zone difficilement visible se rapproche de la zone de pivotement concernée de la porte du véhicule, y compris une zone de sécurité, le dispositif de sécurité émet un avertissement acoustique et/ou optique et commande le système de fermeture de porte de telle sorte que la porte est maintenue fermée.

7. Sécurité de porte selon la revendication 1,
**caractérisée en ce que**
lorsque les moyens de surveillance estiment qu'un objet mobile provenant d'une zone invisible pour l'utilisateur du véhicule ou d'une zone difficilement visible se rapproche de la zone de pivotement concernée de la porte du véhicule, y compris une zone de sécurité, le dispositif de sécurité émet un avertissement acoustique et/ou optique et commande le système de fermeture de porte de telle sorte que la porte est déverrouillée avec retard en présence d'une activation constante de l'ouverture de la porte.

8. Sécurité de porte selon l'une des revendications précédentes,
**caractérisée en ce que**
le dispositif sensoriel environnemental (6) présente des capteurs à ultrasons, à micro-ondes, vidéo, à triangulation infrarouge et/ou à optique active.

9. Sécurité de porte selon l'une des revendications précédentes,
**caractérisée en ce que**
le dispositif de sécurité est en liaison, par le biais d'un réseau de lignes (13), avec d'autres capteurs et/ou appareils de commande présents dans le véhicule et à partir de là, reçoit des signaux relatifs à la position et/ou à la situation du véhicule.

10. Sécurité de porte selon la revendication 8,
**caractérisée en ce que**
le dispositif de sécurité reçoit, par le biais du réseau de lignes (13), au moins un ou plusieurs des signaux suivants :
- un signal relatif à la direction du véhicule,
- un signal relatif à la vitesse du véhicule,
- un signal relatif à l'accélération,
- un signal relatif à l'accélération transversale,
- un signal relatif à la position par exemple l'azimut et l'élévation,
- un signal relatif à l'angle d'attaque et/ou
- un signal relatif à l'angle de roulis
- un signal relatif à l'état d'activation de l'allumage.
